# EUROPEAN PATENT APPLICATION

(11) **EP 4 663 538 A1**
(43) Date of publication of application: **17.12.2025**
(21) Application number: 24181957.2
(22) Date of filing: 13.06.2024
(51) Int. Cl.: B64C 9/02

(54) **CONNECTION DEVICE, ASSOCIATED WING ASSEMBLY AND METHOD OF CONNECTING AN AIRCRAFT MOVEABLE SURFACE TO AN AIRCRAFT WING ELEMENT**

(71) Applicant: AIRBUS Operations GmbH, 21129 Hamburg (DE)
(72) Inventor: Wunderlich, Sönke, 21129 Hamburg (DE); Held, Tobias, 21129 Hamburg (DE); Daandels, Dort, 21129 Hamburg (DE)

(57) **Abstract**

This connection device (20) is configured for connecting an aircraft moveable surface (18) to an aircraft wing element (16), comprises a connection element (34) being elongated along a connection axis (A-A') and comprises:
- a body (48); and
- a head (50), comprising:
+ an abutting portion (52), configured for abutting with one of the aircraft moveable surface (18) and aircraft wing element (16), the abutting portion (52) being configured for constraining a displacement of the connection element (34) along the connection axis (A-A') relative to the aircraft moveable surface (18) and the aircraft wing element (16), and
+ a tightening portion (54), radially larger than the abutting portion (52) and the body (48), the tightening portion (54) being arranged between the abutting portion (52) and the body (48).

## Description

The present disclosure relates to a connection device configured for connecting an aircraft moveable surface to an aircraft wing element. The present disclosure also relates to a wing assembly comprising such a connection device. The present disclosure further relates to a method of connecting an aircraft moveable surface to an aircraft wing element using such a connection device.

In the domain of connection devices in the aviation industry and in particular for connection devices for connecting an aircraft moveable surface to an aircraft wing element, it is critical to ensure that the connection devices provide a proper connection between the elements they connect. In particular, it is critical to ensure that such connection devices cannot detach once the connection device is installed on the aircraft.

Traditional connection devices comprise bolts, acting as articulation of the connection device. It is then critical to ensure that such bolts remain in place once they are installed, in order to ensure a proper connection between the aircraft moveable surface and the aircraft wing element.

To this end, one knows adding blocking elements to such bolts, such blocking elements being configured to prevent unscrewing of the bolt and subsequent failure of the connection. Such blocking elements could take many forms, such as retainer pins, locking rings, additional nuts, etc...

The above presented solutions are however not entirely satisfying. In particular, such solutions are generally bulky, in particular along a radial direction of the bolt, make the connection device complex, and lead to a labor intensive assembly of the aircraft moveable to the aircraft wing element.

It is therefore an aim of this invention to provide a simple and reliable connection device that has a limited radial footprint and which makes the aircraft moveable surface and the aircraft wing element easy to assemble.

To that end, the invention relates to a connection device configured for connecting an aircraft moveable surface to an aircraft wing element, the connection device comprising a connection element being elongated along a connection axis and comprising:
- a body; and
- a head, comprising:
   + an abutting portion, configured for abutting with one of the aircraft moveable surface and aircraft wing element, the abutting portion being configured for constraining a displacement of the connection element along the connection axis relative to the aircraft moveable surface and the aircraft wing element, and
   + a tightening portion, radially larger than the abutting portion and the body, the tightening portion being arranged between the abutting portion and the body.

The use of a connection element comprising a head which comprises an abutting portion as presented above is especially advantageous since the abutting portion limits the displacement along the connection axis of the connection element independently of the presence/position of a/the nut. This allows getting rid of blocking elements without compromising the reliability of the connection. This allows in turns obtaining a simple and reliable connection device that has a limited radial footprint and which makes the aircraft moveable surface and the aircraft wing element easy to assemble.

According to other advantageous aspects of the invention, the connection device comprises one or more of the following features taken alone or according to all technically possible combinations:
- the body comprises a threaded portion and a shank portion, the shank portion being axially arranged between the threaded portion and the head;
- the tightening portion defines polygonal contour;
- the abutting portion protrudes from the tightening portion by between 3 mm and 30 mm;
- the connection device further comprises:
   - a first leaf, configured to be fastened on the aircraft moveable surface,
   - a second leaf, configured to be fastened on the aircraft wing element, and
   - a nut, fastened to the body of the connection element,
      wherein the connection element connects the first leaf and the second leaf;
- one of the first and second leaves comprises two external connection lugs, the other of the first and second leaves comprising one internal connection lug, the internal connection lug being axially arranged between the two external connection lugs, both the internal and external connection lugs comprising an orifice and defining together a connection passage, the connection element being arranged in the connection passage, the internal and external connection lugs being arranged between the head of the connection element and the nut;
- the connection device further comprises at least one tubular spacer arranged around the body of the connection element.;
- the connection device further comprises at least one stepped spacer, the or each stepped spacer being radially arranged between the body of the connection element and one of the internal or external connection lugs;
- the or each step spacer comprises a tubular portion and a flange portion, the flange portion of at least one of the stepped spacers being axially arranged between the first leaf and the second leaf; and
- the connection device further comprises at least one ring spacer, the at least one ring spacer being axially arranged between the head and the nut and cooperating with at least one of the first and second leaves.

The invention further relates to an aircraft wing assembly comprising an aircraft moveable surface, an aircraft wing element and a connection device as above mentioned.

According to other advantageous aspects of the invention, the aircraft wing assembly comprises one or more of the following features taken alone or according to all technically possible combinations:
- one of the aircraft moveable surface and aircraft wing element comprises a wall intersecting with the connection axis, the abutting portion being configured for abutting with the wall for constraining the displacement of the connection element along the connection axis relative to the aircraft moveable surface and the aircraft wing element;
- an abutting distance between the abutting portion of the head and the wall is comprised between 0.1 mm and 5.0 mm, the axial displacement of the connection element along the connection axis being constrained to said abutting distance; and
- the aircraft wing element is a flap and/or wherein the aircraft moveable surface is a tab.

The invention further relates to a method of connecting an aircraft moveable surface to an aircraft wing element using a connecting as presented above, the method comprising the following subsequent steps:
- connecting the first leaf and the second leaf with the connection element; and
- fastening the first leaf to the aircraft moveable surface and the second leaf to the aircraft wing element.

The invention will be better understood when reading the following description, which is given solely by way of example and with reference to the appended drawings, in which:
- Figure 1 is a schematic view of an aircraft comprising a wing assembly which comprises at least one connection device according to the invention;
- Figure 2 is a schematic perspective view of one of the connection device of the wing assembly presented on figure 1;
- Figure 3 is a schematic section view of the device presented on figure 2, wherein the section view is taken passing through a connection axis defined by the connection element of the connection device; and
- Figure 4 is a schematic view similar to the schematic view of figure 3, of the connection device of the wing assembly presented on figure 1.

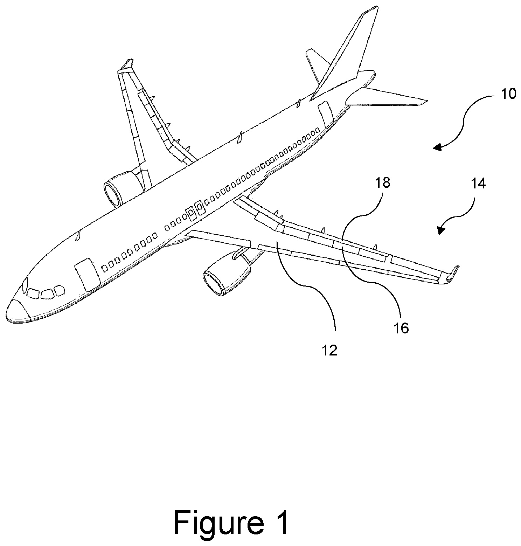

As illustrated on figure 1, an aircraft 10 comprises wings 12.

The aircraft 10 is for example an aircraft such as for example an airliner.

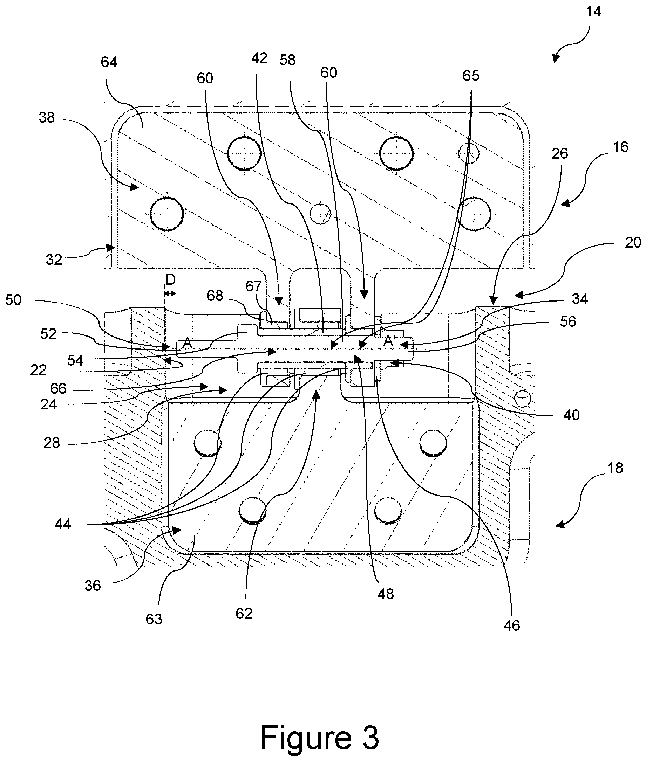

The wing 12 comprises an aircraft wing assembly 14, partly illustrated on figure 3. The aircraft wing assembly 14 comprises an aircraft wing element 16, an aircraft moveable surface 18 and at least one connection device 20.

The aircraft wing element 16 is for example a flap of the aircraft 10 and/or the aircraft moveable surface 18 is for example a tab of the aircraft 10. In particular, in the example presented on figures 1 to 4, the aircraft wing element 16 is a flap of the aircraft and the aircraft moveable surface 18 is a tab of the aircraft. For example, the tab can also be referred to as tab of such a flap.

In a non-illustrated alternative, the aircraft wing element 16 is a tab as mentioned above and/or the aircraft moveable surface 18 is a flap as mentioned above.

In further non-illustrated alternatives, the aircraft wing element 16 and the aircraft moveable surface 18 correspond to any other part of the aircraft which are moveable one relative to another. The term aircraft wing element 16 might for example, in such a case, refer to a portion of a vertical tail plane or to a portion of the horizontal stabilizer of the aircraft 10. The term "wing" might thus be understood broadly as any aerodynamic effective surface of the aircraft 10.

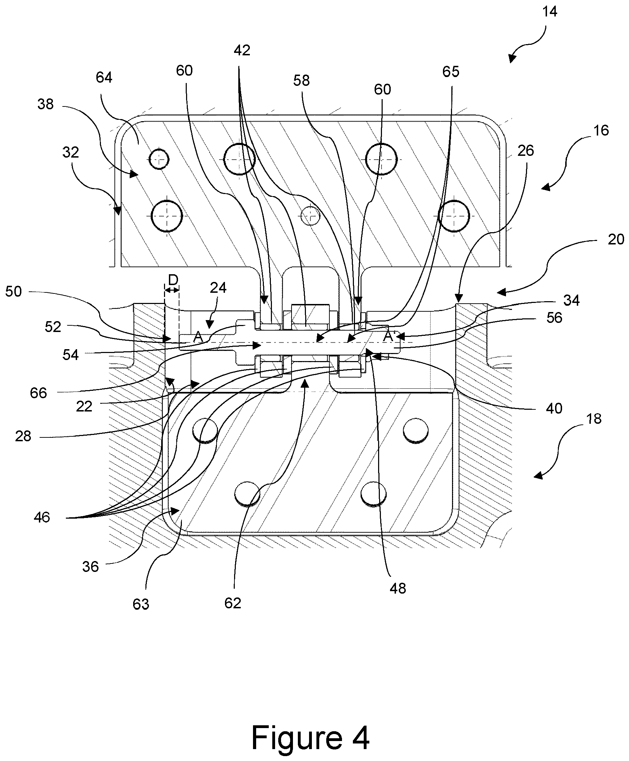

As this will be presented in more details later, and as visible in the example of figure 3 and 4, one of the aircraft moveable surface 18 and aircraft wing element 16 comprises a wall 22.

In particular, in the examples illustrated in figures 3 and 4, the aircraft moveable surface 18 comprises a cavity 24 defining by the wall 22.

As visible from figures 3 to 4, the cavity 24 is for example opening on an edge 26 of the aircraft moveable surface 18, and preferably on an edge 26 facing the aircraft wing element 16.

As visible on figures 3 and 4, and as presented in more details later, the aircraft moveable surface 18 comprises for example a first support surface 28.

In the example illustrated on figures 3 and 4, the first support surface 28 is for example defining the cavity 24 together with the wall 22. For example, the first support surface 28 is substantially perpendicular to the wall 22.

As visible on figures 3 and 4, and as presented in more details later, the aircraft wing element 16 comprises a second support surface 32.

As visible from figures 3 and 4, the connection device 20 is configured for connecting the aircraft moveable surface 18 to the aircraft wing element 16.

For example, the aircraft wing assembly 14 comprises a plurality of connection devices 20 for connecting the aircraft moveable surface 18 to the aircraft wing element 16.

The connection device 20 comprises a connection element 34. The connection device 20 further comprises for example a first leaf 36, a second leaf 38 and a nut 40. For example, the connection device 20 also comprises at least on tubular spacer 42.

As visible on figure 3, the connection device 20 also comprises for example at least one stepped spacers 44 and at least on ring washer 46.

The connection element 34 is elongated along a connection axis A-A'.

As for example visible from figure 3, the connection element 34 comprises a body 48 and a head 50.

The head 50 comprise an abutting portion 52 and a tightening portion 54.

The tightening portion 54 is radially larger than the abutting portion 52 and the body 48. By radially larger, one understands that the radial direction is considered with reference to the connection axis A-A'.

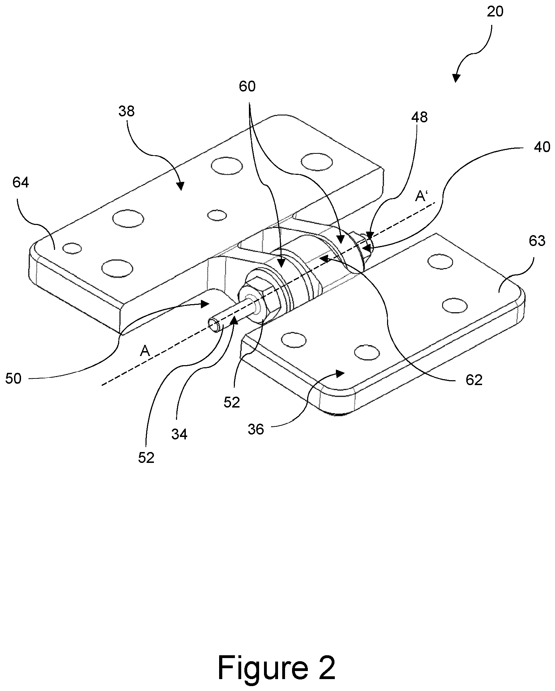

As visible on figures 2 to 4, the tightening portion 54 is for example configured to cooperate with a tightening tooling (non-represented) during the assembly of the aircraft wing assembly 14.

The tightening portion 54 comprises for example to that end a polygonal contour and for example a hexagonal contour.

The abutting portion 52 is configured for abutting with one of the aircraft moveable surface 18 and aircraft wing element. In the examples of figure 3 and 4, the abutting portion 52 is in particular configured for abutting the aircraft moveable surface 18.

The abutting portion 52 protrudes for example from the tightening portion 54 along the connection axis A-A'. For example, the abutting portion 52 protrudes from the tightening portion 54 in order to minimize a designed gap between the abutting portion 52 and the aircraft wing element 16 and/or the aircraft moveable surface. Such a design gap corresponds for example to the abutting distance D presented in more details later on.

The abutting portion 52 protrudes for example from the tightening portion 54 by between 3 mm and 30 mm.

The abutting portion 52 is configured for constraining a displacement of the connection element 34 along the connection axis A-A' relative to the aircraft moveable surface 18 and the aircraft wing element 16.

For example, as illustrated in figures 3 and 4, the connection axis A-A' intersects the wall 22. In this example, the abutting portion 52 is configured for abutting with the wall 22 for constraining the displacement of the connection element 34 along the connection axis A-A' relative to the aircraft moveable surface 18 and the aircraft wing element 16.

As visible from figures 3 and 4, the connection device 20 defines with the wall 22 an abutting distance D.

In particular, as this will be presented in more detail later, the abutting distance D corresponds for example to the distance between the abutting portion 52 of the head 50 and the wall 22 when the nut 40 is fastened to the connection element 34. It is here understood that the abutting distance D corresponds to the distance between the abutting portion 52 and the wall 22 when the connection device 20 is in a nominal connection configuration, with the nut 40 for example completely tightened to the connection element 34. It is then understood that the connection element 34 is for example configured for abutting with the wall 22 when the connection device 20 is in a non-nominal connection configuration, with the nut 40 for example not completely tightened to the connection element 34 or unfastened of the connection element 34.

The axial displacement of the connection element 34 along the connection axis A-A' is then for example constrained to the abutting distance D. As this will be presented in more details later, the axial displacement of the connection element 34 is then for example limited to the abutting distance D when the nut 40 not completely tightened to the connection element 34 or unfastened of the connection element 34.

The abutting distance D corresponds for example to a distance configured to prevent a loss of the connection element 34 from the connection device 20 in case of loss of the nut 40. In other words, the abutting distance D is chosen such that when the abutting portion 52 abuts the wall 22, the body remains engaged with both the first 36 and second 38 leaves to attach said first 36 and second 38 leaves. The abutting distance D is for example comprised between 0.1 mm and 5.0 mm.

As presented for the examples of figures 3 and 4, the body 48 comprise for example a threaded portion 56 and a shank portion 58. The shank portion is for example axially arranged between the threaded portion 56 and the head 58. For example, the head 50 and the threaded portion 56 are arranged at opposed ends (non-referenced) of the connection element 34.

As illustrated from figures 3 and 4, the first leaf 36 is configured to be fastened on the aircraft moveable surface 18 and the second leaf 38 is configured to be fastened on the aircraft wing element.

In particular, in the examples of figures 3 and 4, the first leaf 36 is fastened to the first support surface 28 and the second leaf 38 is fastened to the second support surface 32.

The connection element 34 connects for example the first leaf 36 and the second leaf 38.

One of the first 36 and second 38 leaves comprises for example two external connection lugs 60, the other of the first 36 and second 38 leaves comprising for example one internal connection lug 62.

In non-illustrated examples, one of the first 36 and second 38 leaves comprises more than more than two external connection lugs 60 and/or the other of the first 36 and second 38 leaves comprises for example more than on internal connection lug 62.

In the example of figures 2 to 4, the first leaf 36 comprises one internal connection lug 62 and the second leaf 38 comprises two external connection lugs 60.

Furthermore, the first leaf 36 comprises for example a first connection panel 63 and the second leaf 38 comprises for example a second connection panel 64.

The first connection panel 63 is for example fastened, for example screwed, to the first support surface 28 and the second connection panel 64 is for example fastened, for example screwed, to the second support surface 32.

As visible from figures 2 to 4, the external connection lug 60 and the internal connection lug 62 are for example each protruding from one of the first 63 or second 64 connection panels, for example in the continuity of a plane defined by one of the first 63 or second 64 connection panels. In other words, each external 60 or internal 60 connection lugs protrude from an edge (non-referenced) of one of the first 63 or second 64 connection panels.

The internal connection lug 62 is for example axially arranged between the external connection lugs 60.

As presented in figures 2 to 4, both the internal connection lug 62 and the external connection lugs 60 comprise and orifice 65.

The internal 62 and external 60 connection lugs define for example a connection passage 66. For example, and as illustrated from figures 2 to 4, the orifice 65 of each of the external 60 and internal 62 connection lugs are for example defining together the connection passage 66.

The connection element 34 is then arranged in the connection passage 66. In particular, as illustrated in figures 2 to 4, the body 48 of the connection element 34, and for example the shank portion 58 of the body 48, is for example arranged in the connection passage 66.

As illustrated from figures 2 to 4, the external 60 and the external 62 lugs are for example arranged between the head 50 of the connection element 34 and the nut 40.

In particular, the nut 40 is for example fastened to the body 48 of the connection. In particular, in the example of figures 2 to 4, the nut 40 is fastened to the threaded portion 56 of the body 48. The nut 40 is then for example screwed on connection element 34 so that the first 36 and second 38 leaves, for example the external 60 and internal 62 lugs, are axially arranged between the nut 40 and the head 50 of the connection element 34.

The tubular spacer 42 is for example radially arranged between the connection element 34 and at least one of the first 36 and second 38 leaves.

The tubular spacer 42 is for example arranged around the body 48 of the connection element 34 and in the passage 66 defined by the external 60 and internal 62 connection lugs.

In the example of figure 3, the connection device 20 comprises only one tubular spacer 42 radially arranged between the connection element 34 and both the first 36 and second 38 leaves.

For example, and as illustrated on figure 3, the connection device comprises a plurality of stepped spacers 44.

Each stepped spaced 44 comprises for example a tubular portion 67 and a flange portion 68.

As visible from figure 3, each stepped spacer 44 is radially arranged between the body 48 of the connection element 34 and one of the first 36 or second 38 leaves, for example between the body 48 and one of the internal 62 or external 60 connection lugs. For example, the tubular portion 67 of the stepped spacer 44 is arranged in the passage 66 defined by the external 60 and internal 62 connection lugs.

Furthermore, and for example at least one stepped spacer 44 is radially arranged around the tubular spacer 42. In the example of figure 3, two stepped spacers 44 are radially arranged around the tubular spacer 42.

The stepped spacer 44 ensures for example axial connection of the connection element 34 and/or the tubular spacer 42 to one of the first 36 or second 38 leaves.

As presented in figure 3, the connection device 20 comprises for example a stepped spacer 44 for each of the internal 62 and external 60 connection lugs, the tubular portions 67 of each stepped spacer 44 being arranged in the orifice 65 of one of the internal 62 and external 60 connection lugs.

For example, as illustrated on figure 3, at least one stepped spacer 44, and for example the flange portion 68 of said at least one stepped spacer 44, is axially arranged between the first 36 and second 38 leaves. In particular, the flange portion 68 is for example arranged between the external 60 and the internal 62 connection lugs.

In the example of figure 3, the flange portion 68 of two of the stepped spacers 44 are arranged between the first 36 and second 38 leaves and the flange portion 68 of one of the stepped spacers 44 is arranged between the head 50 of the connection element 34 and one of the first 36 and second 38 leaves.

As visible from figure 3, the at least one ring washer 46 is axially arranged between the head 50 and the nut 40. The at least one ring washer 46 cooperates for example with at least one of the first 36 and second 38 leaves. For example, the at least one ring washer 46 cooperates with one of the external 60 and internal 62 connection lugs.

The stepped spacer 44 and/or the tubular spacer 42 and/or the ring washer 46 is for example made of a standard bush material and for example from a polymer such as for example polytetrafluoroethylene or polyetheretherketone.

In the example of figure 3, the connection device 20 comprises one ring washer 46 which cooperates with one of the external connection lugs 60 and is axially arranged between the external connection lugs 60 and the nut 40.

In the example of figure 3, an axial play of between 0.5 mm and 20 mm, for example between 1 mm and 10 mm is for example provided by an axial width of the internal lug 62, an axial spacing of the external lugs 60, and an axial thickness of the flange portion 68 arranged between the external lugs 60.

The axial play corresponds for example to the relative movement between the first leaf 36 and the second leaf 38 allowed by the connection device under nominal operating conditions, for example when the nut is completely fastened to the body 48 of the connection element 34.

In the rest of the description, a connection device 20 which provides an axial play as above presented and which is for example a connection device 20 as presented on figure 3 is referred to as a slave connection device.

A connection device 20 as presented on figure 4 will now be presented in more details. A connection device 20 according to such an embodiment differs from the connection device of figure 3 presented above only as follows. Analogous elements have the same references.

In such an embodiment, the connection device 20 does not comprise any stepped spacers 44. The connection device 20 comprises four ring washers 46 and three tubular spacers 42.

Each of tubular spacers 42 is radially arranged between the body 48 of the connection element 34 and one of the internal 62 and external 60 connection lugs.

Two of the ring washers 46 are axially arranged on both sides of the internal connection lug 62, each of these two ring spacers being axially arranged between the said internal connection lug 62 and the external connection lugs 60.

Another of the ring washers 46 is axially arranged between one of the external connection lugs 60 and the head 50 of the connection element 34 and another of the ring washers 46 is axially arranged between one of the external connection lugs 60 and the nut 40. These ring washers are for example different to the ring washers 46 which are axially arranged on both sides of the internal connection lug 62. As visible in the example of figure 4, these washers 46 are for example thinner than ring washers 46 which are axially arranged on both sides of the internal connection lug 62.

In the example of figure 4, and for example, the connection device 20 does not provide any axial play. In other words no axial relative movement between the first leaf 36 and the second leaf 38 is allowed by the connection device 20 under nominal operating conditions, for example when the nut is completely fastened to the body 48 of the connection element 34.

In the rest of the description, a connection device 20 which does not provide any axial play and which is for example a connection device 20 as presented on figure 3 is referred to as a master connection device.

When the aircraft wing assembly 14 comprises a plurality of connection devices 20 for connecting the aircraft moveable surface 18 to the aircraft wing element 16, the aircraft wing assembly 14 comprises for example only one master connection device and at least one slave connection device.

A method of connecting an aircraft moveable surface to an aircraft wing element using a connecting device as above described will now be presented.

In a first step, the first leaf 36 and the second leaf 38 are connected with the connection element 34.

For example, the internal connection lug 62 is arranged between the external connection lugs 60 and the orifices 65 of the connection lugs 60, 62, are aligned to define the passage 65. The connection element 34 is for example arranged introduced in the passage 65 and for example fastened with its nut 40 so that the connection element connects the first leaf 36 and the second leaf 38.

In a second step, following the first step, the first leaf 36 is connected to the aircraft moveable surface 18 and the second leaf 38 is fastened to aircraft wing element 16.

For example, the first connection panel 63 is fastened, for example screwed, on the first support surface 28 and the second connection panel 64 is fastened, for example screwed on the second support surface 32.

The first 36 and second 38 connection leaves are preferably fastened such that the abutting portion 52 of the head 50 of the connection element 34 faces the wall 22, in particular such that the abutting portion 52 is configured for constraining a displacement of the connection element 34 along the connection axis A-A' relative to the aircraft moveable surface 18 and the aircraft wing element 16.

As presented above, the described abutting portion 52 is especially advantageous to get a reliable and compact connection between movable parts of an aircraft.

A body 48 comprising a threaded portion 56 and a shank portion 58 is especially advantageous for easily installing the connection device 20 in the aircraft wing assembly 14 while having a robust and smooth connection between the aircraft wing element 16 and the aircraft moveable surface 18.

The tightening portion 54 defining a polygonal contour is especially advantageous make the installation of the connection device easy.

The protrusion of the abutting portion 52 relative to the tightening portions especially advantageous to improve safety of operation while limiting the footprint of the connection device 20.

The connection device comprising leaves 36, 38 as above presented further contribute in obtaining a compact, yet reliable and safe, connection device 20.

The various washers 42, 44, 46 contribute to improving the connection provided by the connection device for example by limiting friction and/or relative displacement, between the aircraft wing element 16 and the aircraft moveable surface 18.

The abutting distance D presented above is further especially relevant since it allows an easy installation of the connection device 20 to the aircraft wing element 16 and to the aircraft moveable surface 18 while preventing the connection device 20 to disengage from the first leaf 36 and second leaf 38 once the connection device 20 is installed in the aircraft wing assembly 14.

The method of connecting an aircraft moveable surface 18 to an aircraft wing element 16 using a connection element 34 as presented above is especially advantageous since such method is especially easy to implement and since such method ensures that the provided connection of the aircraft moveable surface 18 to the aircraft wing element 16 is reliable.

## Claims

1. Connection device (20) configured for connecting an aircraft moveable surface (18) to an aircraft wing element (16), the connection device (20) comprising a connection element (34) being elongated along a connection axis (A-A') and comprising:
- a body (48); and
- a head (50), comprising:
+ an abutting portion (52), configured for abutting with one of the aircraft moveable surface (18) and aircraft wing element (16), the abutting portion (52) being configured for constraining a displacement of the connection element (34) along the connection axis (A-A') relative to the aircraft moveable surface (18) and the aircraft wing element (16), and
+ a tightening portion (54), radially larger than the abutting portion (52) and the body (48), the tightening portion (54) being arranged between the abutting portion (52) and the body (48).

2. Connection device (20) according to claim 1, wherein the body (48) comprises a threaded portion (56) and a shank portion (58), the shank portion (58) being axially arranged between the threaded portion (56) and the head (50).

3. Connection device (20) according to claim 1 or 2, wherein the tightening portion (54) defines polygonal contour.

4. Connection device (20) according to any of the preceding claims, wherein the abutting portion (52) protrudes from the tightening portion (54) by between 3 mm and 30 mm.

5. Connection device (20) according to any of the preceding claims, wherein the connection device (20) further comprises:
- a first leaf (36), configured to be fastened on the aircraft moveable surface (18),
- a second leaf (38), configured to be fastened on the aircraft wing element (16), and
- a nut (40), fastened to the body (48) of the connection element (34),
wherein the connection element (34) connects the first leaf (36) and the second leaf (38).

6. Connection device (20) according to claim 5, wherein one of the first (36) and second (38) leaves comprises two external connection lugs (60), the other of the first (36) and second (38) leaves comprising one internal connection lug (62), the internal connection lug (62) being axially arranged between the two external connection lugs (60), both the internal (62) and external (60) connection lugs comprising an orifice (65) and defining together a connection passage (66), the connection element (34) being arranged in the connection passage (66), the internal (62) and external (60) connection lugs being arranged between the head (50) of the connection element (34) and the nut (40).

7. Connection device (20) according to claim 5 or 6, wherein the connection device (20) further comprises at least one tubular spacer (42) arranged around the body (48) of the connection element (34).

8. Connection device (20) according to any of the claims 5 to 7, wherein the connection device (20) further comprises at least one stepped spacer (44), the or each stepped spacer (44) being radially arranged between the body (48) of the connection element (34) and one of the internal (62) or external (60) connection lugs.

9. Connection device (20) according to claim 8, wherein the or each step spacer (44) comprises a tubular portion (67) and a flange portion (68), the flange portion (68) of at least one of the stepped spacers (44) being axially arranged between the first leaf (36) and the second leaf (38).

10. Connection device (20) according to any of the claims 5 to 8, wherein the connection device (20) further comprises at least one ring washer (46), the at least one ring washer (46) being axially arranged between the head (50) and the nut (40) and cooperating with at least one of the first (36) and second (38) leaves.

11. Aircraft wing assembly (14) comprising an aircraft moveable surface (18), an aircraft wing element (16) and a connection device (20) according to any of the claims 1 to 10.

12. Aircraft wing assembly (14) according to claim 11, wherein one of the aircraft moveable surface (18) and aircraft wing element (16) comprises a wall (22) intersecting with the connection axis (A-A'), the abutting portion (52) being configured for abutting with the wall (22) for constraining the displacement of the connection element (34) along the connection axis (A-A') relative to the aircraft moveable surface (18) and the aircraft wing element (16).

13. Aircraft wing assembly (14) according to claim 12, wherein an abutting distance (D) between the abutting portion (52) of the head (50) and the wall (22) is comprised between 0.1 mm and 5.0 mm, the axial displacement of the connection element along the connection axis (A-A') being constrained to said abutting distance (D).

14. Aircraft wing assembly (14) according any of the claims 11 to 13, wherein the aircraft wing element (16) is a flap and/or wherein the aircraft moveable surface (18) is a tab.

15. Method of connecting an aircraft moveable surface (18) to an aircraft wing element (16) using a connecting device (20) according to any of the claims 5 to 10, the method comprising the following subsequent steps:
- connecting the first leaf (36) and the second leaf (38) with the connection element (34); and
- fastening the first leaf (36) to the aircraft moveable surface (18) and the second leaf (38) to the aircraft wing element (16).
